(19) Europäisches Patentamt
European Patent Office
Office européen des brevets

(11) EP 0 919 785 A2

# (12) EUROPÄISCHE PATENTANMELDUNG

(43) Veröffentlichungstag:
02.06.1999 Patentblatt 1999/22

(51) Int. Cl.$^6$: G01B 21/26

(21) Anmeldenummer: 98121965.2

(22) Anmeldetag: 19.11.1998

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 01.12.1997 DE 19753204

(71) Anmelder: DaimlerChrysler AG
70567 Stuttgart (DE)

(72) Erfinder:
• Kutscher, Eberhard
71672 Marbach (DE)
• Steinert, Hans-Rudolf
72475 Bitz (DE)

(54) Verfahren und Vorrichtung zur Einstellung des Sturzes von Fahrzeugrädern

(57)      Bei einem Verfahren zur Ermittlung des Sturzes von Fahrzeugrädern werden kinematische Fahrwerks-Kenngrößen gemessen und der Sturz wird aus diesen Fahrwerks-Kenngrößen berechnet.

Um mit geringem Aufwand den Sturz bei Fahrzeugen mit schiefstehendem Fahrzeugaufbau zu ermitteln, ist vorgesehen, daß die beiden Radachsen-Neigungswinkel zwischen der linken bzw. rechten Radachse und einer Horizontalebene gemessen werden und daß der Sturz am linken und am rechten Rad als lineare Funktion der gemessenen Radachsen-Neigungswinkel ermittelt wird.

EP 0 919 785 A2

**Beschreibung**

Die Erfindung betrifft ein Verfahren und eine Vorrichtung zur Einstellung des Sturzes von Fahrzeugrädern nach dem Oberbegriff des Anspruches 1 bzw. 9.

Aus der DE 44 27 483 C1 ist es bekannt, den Sturz eines Fahrzeugrades mittels eines an der Felge montierten Meßkopfes zu erfassen und die Meßdaten über eine elektronische Verarbeitungseinheit auszuwerten und anzuzeigen. Zur Einstellung des Sturzes werden die gemessenen Sturzwerte mit vorgegebenen Sollwerten für den Sturz verglichen. Damit der Sturz korrekt eingestellt werden kann, muß das Fahrzeug horizontal ausgerichtet werden, so daß der Fahrzeugaufbau gerade steht. Bei Fahrzeugen mit schiefstehendem Aufbau besteht das Problem, daß der tatsächliche Sturz der Räder zwar richtig gemessen werden kann, die Sollwerte des Sturzes jedoch die Schieflage des Aufbaus nicht berücksichtigen. Es erfolgt mithin eine Einstellung auf Sollwerte, die nur für gerade stehende, aber nicht für schiefstehende Fahrzeuge gelten. Sobald der Aufbau wieder horizontal ausgerichtet wird beispielsweise mit Hilfe einer Fahrwerksregelung, stellt sich ein vom Sollwert abweichender Sturz ein.

Zur korrekten Einstellung des Sturzes muß die Karosserie eben ausgerichtet werden, was in der Regel nach Augenmaß erfolgt. In der Praxis wird eine exakte horizontale Ausrichtung des Aufbaus jedoch nicht erreicht, mit der Folge, daß aufgrund der relativ großen Abweichung von bis zu 1° der Sturz auf falsche Sollwerte eingestellt wird. Die Folgen sind erhöhter Reifenverschleiß und verschlechtertes Fahrverhalten.

Um den Fehler zu minimieren, können zwar exaktere Methoden zur Justierung des Fahrzeugs angewandt werden, die dafür benötigten Vorrichtungen sind jedoch entsprechend aufwendig in Anschaffung und Unterhalt.

Ein weiteres Meßverfahren bzw. eine weitere Meßvorrichtung zur Ermittlung des Sturzes ist aus der DE 41 34 411 A1 bekannt. Diese Druckschrift offenbart, den Sturzwinkel als Funktion leicht meßbarer kinematischer Kenngrößen darzustellen. Hierzu werden unterschiedliche vertikale Abstände eines Karosserieteils und die dazugehörigen Winkelstellungen des Rades gemessen und zueinander in Beziehung gesetzt. Auf diese Weise ist es möglich, durch Messung einfach zu ermittelnder Kenngrößen den Sturz zu bestimmen. Es ist weiterhin möglich, unabhängig von der Beschaffenheit des Untergrunds auch bei schiefstehenden Fahrzeugen korrekte Ist-Sturzwerte zu ermitteln. Jedoch ist aus der DE 41 34 411 A1 kein Weg bekannt, die von der Horizontalen abweichende Stellung des Fahrzeugs bei der Ermittlung der Soll-Sturzwerte zu berücksichtigen. Es können zwar korrekte Istwerte des Sturzes, jedoch keine korrekten Soll-Sturzwerte ermittelt werden.

Der Erfindung liegt das Problem zugrunde, ein mit geringem Aufwand durchzuführendes Verfahren bzw. eine Vorrichtung zur Sturzeinstellung bei Fahrzeugen mit schiefstehendem Fahrzeugaufbau anzugeben.

Dieses Problem wird erfindungsgemäß mit den Merkmalen des Anspruches 1 bzw. 9 gelöst.

Das erfindungsgemäße Verfahren ist zur Ermittlung des Soll-Sturzes bei Fahrzeugen mit schiefstehendem Fahrzeugaufbau geeignet, unabhängig davon, ob der Fahrzeugaufbau beispielsweise infolge Verschleißes oder ungleich verteilter Belastung trotz eines ebenen Untergrundes schiefsteht. In jedem Fall kann der Sturz eines jeden Rades auf den ermittelten Sollwert eingestellt werden, wobei in dem Sollwert die Schieflage des Fahrzeugaufbaus berücksichtigt ist.

Die Ermittlung des Soll-Sturzes erfolgt indirekt über die Messung der beiden Radachsen-Neigungswinkel - der Winkel zwischen der linken bzw. der rechten Radachse und einer Horizontalebene - im Bereich des linken und rechten Vorder- bzw. Hinterrades und der anschließenden Berechnung des Sturzes als lineare Funktion der Radachsen-Neigungswinkel.

Da für die Vorderachse und für die Hinterachse jeweils zwei Radachsen-Neigungswinkel in die Berechnung des Sturzes der Räder eingehen, ist es möglich, aus der Differenz bzw. der unterschiedlichen Gewichtung der Radachsen-Neigungswinkel unabhängig von der Lage des Aufbaus den Soll-Sturz jedes Rades an Vorder- und Hinterachse zu ermitteln.

Der Soll-Sturz kann unmittelbar gemäß einer linearen Funktion aus den Radachsen-Neigungswinkeln berechnet werden, wobei die konstanten Koeffizienten der Funktionsgleichung auf bekannte, fahrzeugtypabhängige Geometriegrößen, beispielsweise die Spurweite, und auf bekannte Umrechnungsfaktoren zurückzuführen sind.

Der Soll-Sturz kann aber auch mittelbar aus den Radachsen-Neigungswinkeln berechnet werden, indem zunächst der Aufbauneigungswinkel des Fahrzeugaufbaus relativ zu einer Horizontalen aus den Radachsen-Neigungswinkeln bestimmt wird, im nächsten Schritt die Erhebung bzw. das Niveau des Fahrzeugaufbaus links und rechts errechnet wird, dann der theoretische, sich bei horizontalem Fahrzeugaufbau einstellende Soll-Sturz ermittelt und schließlich der tatsächliche Soll-Sturz für Fahrzeuge mit schiefem Aufbau aus dem theoretischen Sturz und dem Aufbauneigungswinkel bestimmt wird. Diese Vorgehensweise hat den Vorteil, daß außer dem tatsächlichen Soll-Sturz auch weitere Kenngrößen ermittelt werden können, die für die Achs- und die Radeinstellung von Interesse sein können. Insbesondere die Ermittlung des Niveaus des Fahrzeugaufbaus hat für die Achseinstellung Bedeutung.

In einer weiteren Ausführung wird zusätzlich zu den Radachsen-Neigungswinkeln auch der Aufbauneigungswinkel gemessen.

Der Soll-Sturz kann dann unmittelbar aus den gemessenen Winkeln ermittelt werden.

Gegebenenfalls können die ermittelten Kenngrößen auch für eine Fahrwerksregelung verwendet werden.

Gemäß der erfindungsgemäßen Vorrichtung, die sich insbesondere zur Durchführung des vorgestellten Verfahrens eignet, ist eine Meßeinrichtung zur Erfassung der Radachsen-Neigungswinkel in Signalform und eine Verarbeitungseinheit vorgesehen, in der die Meßsignale der Meßeinrichtung zur Bestimmung der Sollsignale des Sturzes herangezogen werden. Die in der Verarbeitungseinheit erzeugten Sollsignale können entweder optisch oder akustisch angezeigt bzw. ausgegeben werden. Gegebenenfalls können die Sollsignale durch einen Abgleich mit den Istwerten zur Erzeugung eines Stellsignals herangezogen werden, das einer Stelleinrichtung zur Einstellung des Sturzes zugeführt wird.

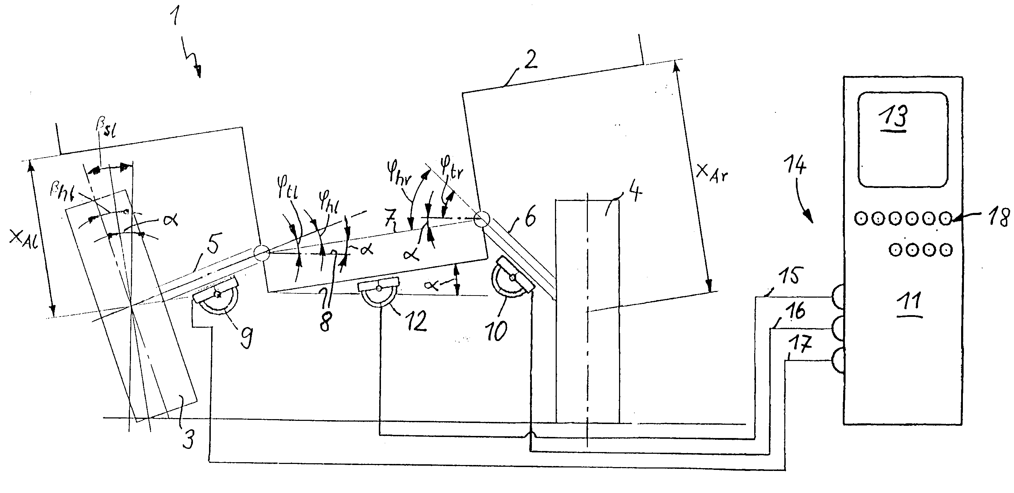

Weitere Vorteile und zweckmäßige Ausführungsformen sind den weiteren Ansprüchen, der Figurenbeschreibung und der Zeichnung zu entnehmen, in der ein Teil einer Fahrzeugkarosserie auf einem Prüfstand dargestellt ist.

In der Figur ist eine Karosserie 1 mit einem Fahrzeugaufbau 2, einem linken Vorderrad 3 an einer Radachse 5 und einem rechten Vorderrad 4 an einer Radachse 6 gezeigt. Die Karosserie 1 befindet sich auf einem Prüfstand 14 zur Ermittlung des Soll-Sturzes $\beta_{sl}$, $\beta_{sr}$ des linken und rechten Rades und zur Einstellung des Sturzes auf den Soll-Sturz. Die Karosserie ist im Bereich des linken Vorderrads 3 stärker in die Aufhängung eingefedert, so daß das Niveau $x_{Al}$ des Fahrzeugaufbaus 2 an der linken Seite tiefer ist als das Niveau $x_{Ar}$ an der rechten Seite des Fahrzeugaufbaus 2. Dementsprechend ist der Fahrzeugaufbau 2 geneigt und die Ebene 7 des Fahrzeugaufbaus 2 weist gegenüber einer Horizontalen 8 den Aufbauneigungswinkel $\alpha$ auf.

Um den Sollwert des Sturzes fehlerfrei und unabhängig von der Neigung des Fahrzeugaufbaus 2 bestimmen zu können, wird der Sollwert $\beta_{sl}$, $\beta_{sr}$ des Sturzes indirekt ermittelt durch Messung der beiden tatsächlichen Radachsen-Neigungswinkel $\varphi_{tl}$, $\varphi_{tr}$ zwischen der linken bzw. rechten Radachse 5, 6 und einer Horizontalebene 8. Die Messung erfolgt mit Hilfe von Meßeinrichtungen 9, 10, beispielsweise Inklinometern, die im Bereich der Radachsen 5, 6 angeordnet sind und mit denen Winkelabweichungen gegenüber einer Horizontalen erfaßt werden können. Bei der dargestellten Neigung des Aufbaus 2 berechnen sich die theoretischen Radachsen-Neigungswinkel $\varphi_{hl}$, $\varphi_{hr}$, die sich bei horizontalem, gerade stehendem Aufbau 2 einstellen würden, aus den tatsächlich gemessenen Radachsen-Neigungswinkeln $\varphi_{tl}$, $\varphi_{tr}$ gemäß der Beziehung

$$\varphi_{hl} = \varphi_{tl} - \alpha \, ,$$

$$\varphi_{hr} = \varphi_{tr} + \alpha \, .$$

Der Zusammenhang zwischen dem Aufbauneigungswinkel $\alpha$ und den gemessenen tatsächlichen Radachsen-Neigungswinkeln $\varphi_{tl}$, $\varphi_{tr}$ kann in mehreren Schritten hergeleitet werden. Der Aufbauneigungswinkel $\alpha$ bestimmt sich näherungsweise für kleine Winkel $\alpha$ aus dem Niveau $x_{Al}$ und $x_{Ar}$ des Fahrzeugaufbaus 2 nach der Beziehung

$$\alpha = K_F / S_A * (x_{Ar} - x_{Al}) \, ,$$

wobei $K_F$ einen Korrekturfaktor für die Umrechnung von rad in Grad bezeichnet und $S_A$ die Spurweite an der aktuell betrachteten Achse ist.

Das Niveau $x_{Al}$ und $x_{Ar}$ des Fahrzeugaufbaus 2 kann aus den horizontalen Radachsen-Neigungswinkeln $\varphi_{hl}$, $\varphi_{hr}$, die sich bei einem horizontalen Fahrzeugaufbau 2 einstellen, gemäß den Geradengleichungen

$$x_{Al} = A_N * \varphi_{hl} + B_N \, ,$$

$$x_{Ar} = A_N * \varphi_{hr} + B_N$$

bestimmt werden, wobei $A_N$ einen Multiplikator und $B_N$ einen Offset für die Niveauermittlung bezeichnen und als Geometriegrößen von den Dimensionen des verwendeten Fahrwerks abhängen.

Unter Berücksichtigung der oben genannten Zusammenhänge bestimmt sich der Aufbauneigungswinkel $\alpha$ allein in Abhängigkeit der tatsächlichen Radachsen-Neigungswinkel $\varphi_{tl}$, $\varphi_{tr}$ gemäß der Beziehung

$$\alpha = k * (\varphi_{tr} - \varphi_{tl})$$

mit der Abkürzung

$$k = K_F * A_N / (S_A - 2*K_F * A_N) \, .$$

Alternativ kann der Aufbauneigungswinkel $\alpha$ auch durch Messung ermittelt werden. Hierfür ist am Fahrzeugaufbau 2 eine Meßeinrichtung 12 angeordnet, die den Aufbauneigungswinkel $\alpha$ gegenüber der Horizontalen 8 mißt und über eine Signalleitung 15 an eine Verarbeitungseinheit 11 überträgt.

Mit dem Aufbauneigungswinkel $\alpha$ kann in einem einfachen Schritt das sich einstellende Niveau $x_{Al}$, $x_{Ar}$ des Fahrzeugaufbaus 2 in Abhängigkeit der Radachsen-Neigungswinkel ermittelt werden:

$$x_{Al} = (\varphi_{tl} - \alpha) * A_N + B_N \, ,$$

$$x_{Ar} = (\varphi_{tr} + \alpha) * A_N + B_N \, .$$

Unter Berücksichtigung eines linearen Zusammenhangs zwischen theoretischem Soll-Sturz $\beta_{hl}$, $\beta_{hr}$ für horizontalen Aufbau und dem Niveau $x_{Al}$, $x_{Ar}$ gemäß

$$\beta_{hl} = A_S * x_{Al} + B_S \, ,$$

$$\beta_{hr} = A_S * x_{Ar} + B_S \, ,$$

wobei $A_S$ einen Multiplikator und $B_S$ einen Offset für die Sturzermittlung bezeichnen und wiederum als Geometriegrößen von den Dimensionen des verwendeten Fahrwerks abhängen, kann der tatsächliche Soll-Sturz $\beta_{sl}$, $\beta_{sr}$ für Fahrzeuge mit schiefstehendem Aufbau gemäß dem Zusammenhang

$$\beta_{sl} = \beta_{hl} + \alpha \, ,$$

$$\beta_{sr} = \beta_{hr} - \alpha$$

ermittelt werden. In dieser Herleitung hängt der Soll-Sturz $\beta_{sl}$, $\beta_{sr}$, ausschließlich von bekannten Geometriegrößen und letztendlich von den tatsächlich gemessenen Radachsen-Neigungswinkeln $\varphi_{tl}$, $\varphi_{tr}$ ab.

Die in den Meßeinrichtungen 9, 10 aufgenommenen Radachsen-Neigungswinkel $\varphi_{tl}$, $\varphi_{tr}$ werden als Meßsignale über Signal-leitungen 16, 17 der Verarbeitungseinheit 11, beispielsweise einem Industrierechner, zugeführt und dort gemäß den oben aufgeführten Beziehungen weiterverarbeitet. Die Verarbeitungseinheit 11 weist Bedienungselemente 18 und eine Anzeigeeinheit 13 auf. Es werden der Aufbauneigungswinkel $\alpha$, das Niveau $x_{Al}$, $x_{Ar}$ und der Soll-Sturz $\beta_{sl}$, $\beta_{sr}$ ermittelt und auf der Anzeigeeinheit 13 ausgegeben. Die Vorrichtung kann zusätzliche Meß- und Stelleinrichtungen an den Rädern 3, 4 aufweisen, um den tatsächlichen Sturz an den Rädern zu ermitteln. Diese Meß- und Stelleinrichtungen können über weitere Signalleitungen mit der Verarbeitungseinheit 11 verbunden sein, wobei über Stellsignale, die durch einen Abgleich der Soll- und Istwerte des Sturzes erzeugt werden, der Sturz eingestellt werden kann.

Es kann zweckmäßig sein, alternativ oder zusätzlich in der Verarbeitungseinheit 11 den Soll-Sturz $\beta_{sl}$, $\beta_{sr}$ unmittelbar aus den Radachsen-Neigungswinkeln $\varphi_{tl}$, $\varphi_{tr}$ gemäß den Beziehungen

$$\beta_{sl} = C_1 {}^* \varphi_{tl} + C_2 {}^* \varphi_{tr} + C_3 \, ,$$

$$\beta_{sr} = C_2 {}^* \varphi_{tl} + C_1 {}^* \varphi_{tr} + C_3$$

zu ermitteln und anzuzeigen. Hierin bezeichnen $C_1$, $C_2$ und $C_3$ Konstanten, die sich aus den geometrischen Verhältnissen am Fahrwerk bestimmen gemäß den Beziehungen

$$C_1 = A_N {}^* A_S - k {}^* (A_N {}^* A_S + 1) \, ,$$

$$C_2 = k {}^* (A_N {}^* A_S + 1) \, ,$$

$$C_3 = A_S {}^* B_N + B_S \, ,$$

wobei mit k die oben aufgeführte Abkürzung bezeichnet ist. In dieser Ausführung werden die Zwischenschritte zur Berechnung des Aufbauneigungswinkels $\alpha$, des Niveaus $x_{Al}$, $x_{Ar}$ und des horizontalen Sturzes $\beta_{hl}$, $\beta_{hr}$ nicht benötigt.

In einer anderen Ausführung, die sich insbesondere für durch Messung ermittelte Aufbauneigungswinkel $\alpha$ eignet, wird der Soll-Sturz aus den gemessenen Radachsen-Neigungswinkeln $\varphi_{tl}$, $\varphi_{tr}$ und dem Aufbauneigungswinkel $\alpha$ ermittelt gemäß den Beziehungen

$$\beta_{sl} = [(\varphi_{tl} - \alpha) {}^* A_N + B_N] {}^* A_S + B_S + \alpha \, ,$$

$$\beta_{sr} = [(\varphi_{tr} + \alpha) {}^* A_N + B_N] {}^* A_S + B_S - \alpha \, .$$

Der Sturz kann sowohl für die Vorderräder als auch für die Hinterräder ermittelt bzw. eingestellt werden. Die Radachsen-Neigungswinkel $\varphi_{tl}$, $\varphi_{tr}$ sind die Relativwinkel eines bestimmenden Achsbauteils relativ zur Horizontalen am betreffenden Achsbauteil. Diese Achsbauteile sind im Bereich der Vorderachse beispielsweise die Querlenker oder die Federlenker, im Bereich der Hinterachse beispielsweise die Gelenkwelle.

Die Ermittlung des Ist-Sturzes kann unabhängig von der Neigungsrichtung des Fahrzeugaufbaus gemäß den erläuterten Zusammenhängen erfolgen. Die Neigungsrichtung des Fahrzeugaufbaus nach links oder rechts wird automatisch durch einen positiven oder negativen Betrag des Winkels $\alpha$ erfaßt. Aufgrund des spiegelsymmetrischen Aufbaus des Fahrwerks können die Meßeinrichtungen ohne Einfluß auf die Ergebnisse um 180° vertauscht werden können, wobei lediglich in den angegebenen Beziehungen die Indizierungen „I" und „r" für links und rechts ausgetauscht werden müssen.

**Patentansprüche**

1. Verfahren zur Einstellung des Sturzes von Fahrzeugrädern, wobei kinematische Fahrwerks-Kenngrößen ($\varphi_{tl}$, $\varphi_{tr}$) gemessen werden und der Soll-Sturz ($\beta_{sl}$, $\beta_{sr}$) aus diesen Fahrwerks-Kenngrößen ($\varphi_{tl}$, $\varphi_{tr}$) berechnet wird,
   **gekennzeichnet durch**
   die folgenden Verfahrensschritte:

   a) Messung der beiden Radachsen-Neigungswinkel ($\varphi_{tl}$, $\varphi_{tr}$) zwischen der linken bzw. rechten Radachse (5, 6) und einer Horizontalebene (8),

   b) Ermittlung des Soll-Sturzes ($\beta_{sl}$, $\beta_{sr}$) am linken und am rechten Rad (3, 4) als lineare Funktion der gemessenen Radachsen-Neigungswinkel ($\varphi_{tl}$, $\varphi_{tr}$).

2. Verfahren nach Anspruch 1,
   **dadurch gekennzeichnet,**
   daß der Soll-Sturz ($\beta_{sl}$, $\beta_{sr}$) bestimmt wird durch Superposition und Gewichtung des linken und des rechten Radachsen-Neigungswinkels ($\varphi_{tl}$, $\varphi_{tr}$) gemäß den Beziehungen

$$\beta_{sl} = C_1 {}^* \varphi_{tl} + C_2 {}^* \varphi_{tr} + C_3 \, ,$$

$$\beta_{sr} = C_2 {}^* \varphi_{tl} + C_1 {}^* \varphi_{tr} + C_3 \, ,$$

wobei $C_1$, $C_2$ und $C_3$ Konstanten bezeichnen, die bestimmt werden gemäß den Beziehungen

$$C_1 = A_N {}^* A_S - k {}^* (A_N {}^* A_S + 1) \, ,$$

$$C_2 = k {}^* (A_N {}^* A_S + 1) \, ,$$

$$C_3 = A_S {}^* B_N + B_S \, ,$$

$$k = K_F {}^* A_N / (S_A - 2 {}^* K_F {}^* A_N),$$

mit

$K_F$     Korrekturfaktor Umrechnung rad in Grad,
$A_N$     Multiplikator für die Niveauermittlung,
$B_N$     Offset für die Niveauermittlung
$A_S$     Multiplikator für die Sturzermittlung
$B_S$     Offset für die Sturzermittlung.
$S_A$     Spurweite der analysierten Achse.

3. Verfahren nach Anspruch 1 oder 2,
 **dadurch gekennzeichnet,**
 daß der Aufbauneigungswinkel ($\alpha$) zwischen der Ebene (7) des Fahrzeugaufbaus (2) und der Horizontalen (8) durch Messung ermittelt wird.

4. Verfahren nach Anspruch 1 oder 2,
 **dadurch gekennzeichnet,**
 daß der Aufbauneigungswinkel ($\alpha$) zwischen der Ebene (7) des Fahrzeugaufbaus (2) und der Horizontalen (8) ermittelt wird gemäß der Beziehung

$$\alpha = k {}^* (\varphi_{tl} - \varphi_{tr}) \, .$$

5. Verfahren nach Anspruch 3 oder 4,
 **dadurch gekennzeichnet,**
 daß das Niveau ($x_{Al}$, $x_{Ar}$) des Fahrzeugaufbaus (2) ermittelt wird in Abhängigkeit des Radachsen-Neigungswinkels ($\varphi_{tl}$, $\varphi_{tr}$) und des Aufbauneigungswinkels ($\alpha$) gemäß den Beziehungen

$$x_{Al} = (\varphi_{tl} - \alpha) {}^* A_N + B_N \, ,$$

$$x_{Ar} = (\varphi_{tr} + \alpha) {}^* A_N + B_N \, .$$

6. Verfahren nach Anspruch 5,
 **dadurch gekennzeichnet,**
 daß der sich bei horizontalem Fahrzeugaufbau (2) einstellenden horizontale Sturz ($\beta_{hl}$, $\beta_{hr}$) in Abhängigkeit des Niveaus ($x_{Al}$, $x_{Ar}$) des Fahrzeugaufbaus (2) ermittelt wird gemäß den Beziehungen

$$\beta_{hl} = A_S {}^* x_{Al} + B_S \, ,$$

$$\beta_{hr} = A_S {}^* x_{Ar} + B_S \, .$$

7. Verfahren nach Anspruch 6,
 **dadurch gekennzeichnet,**
 daß der Soll-Sturz ($\beta_{sl}$, $\beta_{sr}$) aus dem horizontalen Sturz ($\beta_{hl}$, $\beta_{hr}$) unter Berücksichtigung des Aufbauneigungswinkels ($\alpha$) ermittelt wird gemäß den Beziehungen

$$\beta_{sl} = \beta_{hl} + \alpha \, ,$$

$$\beta_{sr} = \beta_{hr} - \alpha \, .$$

8. Verfahren nach Anspruch 3 oder 4,
 **dadurch gekennzeichnet,**
 daß der Soll-Sturz ($\beta_{sl}$, $\beta_{sr}$) aus den Radachsen-Neigungswinkeln ($\varphi_{tl}$, $\varphi_{tr}$) und dem Aufbauneigungswinkel ($\alpha$) ermittelt wird gemäß den Beziehungen

$$\beta_{sl} = [(\varphi_{tl} - \alpha) {}^* A_N + B_N] {}^* A_S + B_S + \alpha \, ,$$

$$\beta_{sr} = [(\varphi_{tr} + \alpha) {}^* A_N + B_N] {}^* A_S + B_S - \alpha \, .$$

9. Vorrichtung zur Einstellung des Sturzes von Fahrzeugrädern, insbesondere zur Durchführung des Verfahrens nach einem der Ansprüche 1 bis 8, mit einer Meßeinrichtung (9, 10) zur Messung kinematischer Fahrwerks-Kenngrößen ($\varphi_{tl}$, $\varphi_{tr}$) und einer Verarbeitungseinheit (11) zur Ermittlung des Soll-Sturzes ($\beta_{sl}$, $\beta_{sr}$) in Abhängigkeit der gemessenen Fahrwerks-Kenngrößen ($\varphi_{tl}$, $\varphi_{tr}$),
 **dadurch gekennzeichnet,**
 daß als Meßsignale die Radachsen-Neigungswinkel ($\varphi_{tl}$, $\varphi_{tr}$) zwischen der linken bzw. rechten Radachse (5, 6) und einer Horizontalebene (8) in der Meßeinrichtung (9, 10) erfaßbar sind, wobei die dem Soll-Sturz ($\beta_{sl}$, $\beta_{sr}$) entsprechenden Sollsignale eine lineare Funktion der die Radachsen-Neigungswinkel ($\varphi_{tl}$, $\varphi_{tr}$) repräsentierenden Meßsignale sind.

10. Vorrichtung nach Anspruch 9,
 **dadurch gekennzeichnet,**
 daß in der Verarbeitungseinheit (11) die Sollsignale durch Superposition und Gewichtung der die linken und die rechten Radachsen-Neigungswinkel ($\varphi_{tl}$, $\varphi_{tr}$) repräsentierenden Meßsignale erzeugbar sind.

11. Vorrichtung nach Anspruch 9 oder 10,
 **dadurch gekennzeichnet,**
 daß in der Verarbeitungseinheit (11) ein dem Aufbauneigungswinkel ($\alpha$) entsprechendes Signal durch Gewichtung und Subtraktion des dem rechten Radachsen-Neigungswinkel ($\varphi_{tr}$) entsprechenden Meßsignals von dem dem linken Radachsen-Neigungswinkel ($\varphi_{tl}$) entsprechenden Meßsignal erzeugbar ist.

12. Vorrichtung nach Anspruch 9 oder 10,
**dadurch gekennzeichnet,**
daß eine Meßeinrichtung (12) zur Messung des Aufbauneigungswinkels ($\alpha$) vorgesehen ist.

13. Vorrichtung nach Anspruch 11 oder 12,
**dadurch gekennzeichnet,**
daß in der Verarbeitungseinheit (11) ein dem Niveau ($x_{Al}$, $x_{Ar}$) des Fahrzeugaufbaus (2) entsprechendes Signal durch Gewichtung und Subtraktion des dem Aufbauneigungswinkel ($\alpha$) entsprechenden Signals vom dem linken bzw. dem rechten Radachsen-Neigungswinkel ($\varphi_{tl}$, $\varphi_{tr}$) repräsentierenden Meßsignal erzeugbar ist.

14. Vorrichtung nach Anspruch 13,
**dadurch gekennzeichnet,**
daß in der Verarbeitungseinheit (11) ein dem horizontalen Sturz ($\beta_{hl}$, $\beta_{hr}$) entsprechendes Signal durch Gewichtung und Verschiebung des dem Niveau ($x_{Al}$, $x_{Ar}$) des Fahrzeugaufbaus (2) entsprechenden Signals erzeugbar ist.

15. Vorrichtung nach Anspruch 14,
**dadurch gekennzeichnet,**
daß in der Verarbeitungseinheit (11) ein dem Soll-Sturz ($\beta_{sl}$, $\beta_{sr}$) entsprechendes Signal durch Addition bzw. Subtraktion des dem Aufbauneigungswinkel ($\alpha$) entsprechenden Signals von dem dem horizontalen Sturz ($\beta_{hl}$, $\beta_{hr}$) entsprechenden Signal erzeugbar ist.

16. Vorrichtung nach Anspruch 11 oder 12,
**dadurch gekennzeichnet,**
daß in der Verarbeitungseinheit (11) ein dem Soll-Sturz ($\beta_{sl}$, $\beta_{sr}$) entsprechendes Sollsignal durch Superposition und Gewichtung eines einen Radachsen-Neigungswinkel ($\varphi_{tl}$, $\varphi_{tr}$) repräsentierenden Meßsignals und eines dem Aufbauneigungswinkel ($\alpha$) entsprechenden Signals erzeugbar ist.